# EUROPEAN PATENT APPLICATION

(11) **EP 4 538 817 A1**
(43) Date of publication of application: **16.04.2025**
(21) Application number: 24204382.6
(22) Date of filing: 02.10.2024
(51) Int. Cl.: G05B 23/02, F15B 19/00

(54) **FAILURE PREDICTION OF A PNEUMATIC CONTROL SYSTEM**

(30) Priority: 05.10.2023 IN 202341066857
(71) Applicant: Emerson Process Management Chennai Private Limited, Chengalpattu Tamil Nadu 603004 (IN)
(72) Inventor: Choudhari, Vaibhav Chandrakant, 411024 Pune, Maharashtra (IN); Patil, Bharatkumar Bhupal, 411041 Pune, Maharashtra (IN); Keating, Philip, 239192 Singapore (SG); Lee, Ren Gee, 372083 Singapore (SG); Karewar, Tejas Shailesh, 411057 Pune, Maharashtra (IN)
(74) Representative: Bryn-Jacobsen, Caelia

(57) **Abstract**

A method for monitoring a pneumatic control system 100 including: monitoring a plurality of operating characteristics of a plurality of components 102 of the system 100, logging a plurality of instances of the operating characteristics for each of the components 102, creating a mathematical model of the system 100 from the plurality of instances of the operating characteristics, predicting a failure of one of the components 102 by comparing a trend in the plurality of instances of the operating characteristics to the model. The model can model the system as a whole and/or include discrete modelling of any of the components 102.

## Description

### CROSS REFERENCE TO RELATED APPLICATIONS

This application claims the benefit of Indian Provisional Patent Application No. 202341066857 filed October 5, 2023.

### STATEMENT REGARDING FEDERALLY SPONSORED RESEARCH OR DEVELOPMENT

Not applicable.

### BACKGROUND OF THE INVENTION

Field of the Invention. The present disclosure relates generally to industrial systems and more specifically relates to maintenance and monitoring of industrial systems.

### Description of the Related Art.

Industrial systems typically include many individual components, each of which are subject to failure, either through their own wear or damage caused by failure of other components. Most industrial systems currently rely on scheduled maintenance to prevent such failures. However, scheduled maintenance may call of replacement of perfectly functioning components and may not prevent failure of other components, leading to increased costs and downtime. For example, one cylinder of a pneumatic system may fail before a maintenance schedule would call for its replacement or servicing, while another may perform flawlessly long past a maintenance schedule would call for its replacement.

Other techniques involve monitoring characteristics of systems and/or components and comparing those characteristics to thresholds in order to determine when to replace or service components. However, such techniques are purely reactive and cannot predict failures.

### BRIEF SUMMARY OF THE INVENTION

Applicants have created new and useful devices, systems and methods for monitoring of industrial systems. In at least one example, a method for monitoring of an industrial system, such as a pneumatic control system, can include monitoring a plurality of operating characteristics of the system, logging a plurality of instances of the operating characteristics, creating a baseline or machine signature based on the plurality of instances of the operating characteristics, comparing a trend in the plurality of instances of the operating characteristics to the baseline, predicting a component failure based on the comparison, or any combination thereof. In at least one example, the baseline can be or include a mathematical model of the pneumatic control system, as a whole, and/or of each monitored component of the pneumatic control system. In at least one example, the baseline can include an average of the operating characteristics. In at least one example, the baseline can include a standard deviation of the operating characteristics. In at least one example, the baseline can include one or more tolerances of the operating characteristics.

In at least one example, monitored components can include one or more pneumatic cylinders, one or more pneumatically controlled valves, another component of the system, or any combination thereof. In at least one example, the operating characteristics can include an opening speed, a closing speed, a cycle time, a cycle count, a flow rate, a pressure, a torque, another operating characteristic associated with a pneumatically controlled component, or any combination thereof.

The baseline, or model, can be fixed and/or change over time. In at least one example, the baseline can be fixed once created. In at least one example, the baseline includes fixed elements and moving elements. In at least one example, the moving elements can be modified with subsequent instances of the operating characteristics. In at least one example, the baseline, itself, can be modified with subsequent instances of the operating characteristics.

In at least one example, predicting the component failure can include recognizing a pattern in the trend, such as a pattern based on a previous component failure. In at least one example, the previous component failure can be of, or related to, the component who's failure is being predicted. In at least one example, the previous component failure can be of, or related to, a different component other than the component who's failure is being predicted. In at least one example, the previous component failure can be of, or related to, a different component previously performing the function of the component who's failure is being predicted. In at least one example, in predicting the component failure, the trend can be associated with one or more components while the baseline can be associated with a plurality of components. In at least one example, the trend can be a more recent trend, when compared to the instances of the operating characteristics used to create the baseline, or model. In at least one example, the trend can include instances of the operating characteristics used to create the baseline, or model.

In at least one example, predicting the component failure can include predicting when a pneumatically controlled component will malfunction based on a trend of increased cycle times of the pneumatically controlled component. In at least one example, predicting the component failure can include predicting when a pneumatically controlled component will malfunction based on a trend of decreased flow rate through the pneumatically controlled component. In at least one example, predicting the component failure can include predicting when a pneumatically controlled component will malfunction based on a trend of increased flow rate to and/or through the pneumatically controlled component. In at least one example, predicting the component failure can include predicting when a pneumatically controlled component will malfunction based on a trend of decreased pressure associated with the pneumatically controlled component.

In at least one example, predicting the component failure can include predicting when one pneumatically controlled component will malfunction based on a trend of increased cycle times of that pneumatically controlled component compared with another pneumatically controlled component. In at least one example, predicting the component failure can include predicting when one pneumatically controlled component will malfunction based on a trend of decreased flow rate through that pneumatically controlled component compared with another pneumatically controlled component. In at least one example, predicting the component failure can include predicting when one pneumatically controlled component will malfunction based on a trend of increased flow rate to that pneumatically controlled component compared with another pneumatically controlled component. In at least one example, predicting the component failure can include predicting when one pneumatically controlled component will malfunction based on a trend of decreased pressure associated with that pneumatically controlled component compared with another pneumatically controlled component.

In at least one example, a method for monitoring of an industrial system, such as a pneumatic control system, can include monitoring a plurality of operating characteristics of a plurality of components of the system, logging a plurality of instances of the operating characteristics for each of the components, creating a mathematical model of the system from the plurality of instances of the operating characteristics, predicting a failure of one of the components by comparing a trend in the plurality of instances of the operating characteristics to the model, or any combination thereof. In at least one example, the operating characteristics can include a cycle time, a flow rate, and a pressure associated with each of the components. In at least one example, the model can model the system as a whole and/or include discrete modelling of any of the components.

In at least one example, a method for monitoring of an industrial system, such as a pneumatic control system, can include monitoring a plurality of operating characteristics of a plurality of components of the system, logging a plurality of instances of the operating characteristics for each of the components, creating a mathematical model of the system from the plurality of instances of the operating characteristics, predicting a remaining useful life of one of the components by comparing a trend in the plurality of instances of the operating characteristics to the model, or any combination thereof. In at least one example, the operating characteristics can include a cycle time, a flow rate, and a pressure associated with each of the components. In at least one example, a method can include calculating a remaining useful life for a pneumatic cylinder. In at least one example, the model can model the system as a whole and/or include discrete modelling of any of the components.

In at least one example, a method for monitoring of an industrial system, such as a pneumatic control system, can include monitoring a plurality of operating characteristics of a plurality of components of the system, logging a plurality of instances of the operating characteristics for each of the components, creating a mathematical model of the system from the plurality of instances of the operating characteristics, predicting an optimal pressure of the system to achieve production capacity by comparing a trend in the plurality of instances of the operating characteristics to the model, or any combination thereof. In at least one example, the operating characteristics can include a cycle time, a flow rate, and a pressure associated with each of the components. In at least one example, the model can model the system as a whole and/or include discrete modelling of any of the components.

### BRIEF DESCRIPTION OF THE SEVERAL VIEWS OF THE DRAWINGS

FIG. 1 is a schematic view of one of many examples of a monitored industrial system according to the disclosure.
FIG. 2 is a schematic view of another of many examples of a monitored industrial system according to the disclosure.
FIG. 3 is a graph of operating characteristics of an industrial system according to the disclosure.
FIG. 4 is another graph of operating characteristics of an industrial system according to the disclosure.
FIG. 5 is yet another graph of operating characteristics of an industrial system according to the disclosure.
FIG. 6 is a perspective view of one of many examples of a monitored simplified industrial system according to the disclosure.
FIG. 7 is a front view of a portion of the system of FIG. 6.

### DETAILED DESCRIPTION OF THE INVENTION

The figures described above and the written description of specific structures and functions below are not presented to limit the scope of what Applicants have invented or the scope of the appended claims. Rather, the figures and written description are provided to teach any person skilled in the art to make and use the inventions for which patent protection is sought. Those skilled in the art will appreciate that not all features of a commercial example of the inventions are described or shown for the sake of clarity and understanding. Persons of skill in this art will also appreciate that the development of an actual commercial example incorporating aspects of the present inventions will require numerous implementation-specific decisions to achieve the developer's ultimate goal for the commercial example. Such implementation-specific decisions may include, and likely are not limited to, compliance with system-related, business-related, government-related and other constraints, which may vary by specific implementation, location and from time to time. While a developer's efforts might be complex and time-consuming in an absolute sense, such efforts would be, nevertheless, a routine undertaking for those of skill in this art having benefit of this disclosure. It must be understood that the inventions disclosed and taught herein are susceptible to numerous and various modifications and alternative forms.

The use of a singular term, such as, but not limited to, "a," is not intended as limiting of the number of items. Also, the use of relational terms, such as, but not limited to, "top," "bottom," "left," "right," "upper," "lower," "down," "up," "side," and the like are used in the written description for clarity in specific reference to the figures and are not intended to limit the scope of the inventions or the appended claims. The terms "including" and "such as" are illustrative and not limitative. The terms "couple," "coupled," "coupling," "coupler," and like terms are used broadly herein and can include any method or device for securing, binding, bonding, fastening, attaching, joining, inserting therein, forming thereon or therein, communicating, or otherwise associating, for example, mechanically, magnetically, electrically, chemically, operably, directly or indirectly with intermediate elements, one or more pieces of members together and can further include without limitation integrally forming one functional member with another in a unity fashion. The coupling can occur in any direction, including rotationally. Further, all parts and components of the disclosure that are capable of being physically embodied inherently include imaginary and real characteristics regardless of whether such characteristics are expressly described herein, including but not limited to characteristics such as axes, ends, inner and outer surfaces, interior spaces, tops, bottoms, sides, boundaries, dimensions (e.g., height, length, width, thickness), mass, weight, volume and density, among others.

Any process flowcharts discussed herein illustrate the operation of possible implementations of systems, methods, and computer program products according to various examples of the present disclosure. In this regard, each block in a flowchart may represent a module, segment, or portion of code, which can comprise one or more executable instructions for implementing the specified logical function(s). It should also be noted that, in some implementations, the function(s) noted in the block(s) might occur out of the order depicted in the figures. For example, blocks shown in succession may, in fact, be executed substantially concurrently. It will also be noted that each block of flowchart illustration can be implemented by special purpose hardware-based systems that perform the specified functions or acts, or combinations of special purpose hardware and computer instructions.

Applicants have created new and useful devices, systems and methods for monitoring of industrial systems. In at least one example, a method, such as a method for monitoring one or more industrial systems, e.g., a pneumatic control system, can include monitoring a plurality of operating characteristics of the system(s), logging a plurality of instances of the operating characteristics, creating a baseline(s) or machine signature(s) based on the plurality of instances of the operating characteristics, comparing a trend(s) in the plurality of instances of the operating characteristics to the baseline(s), predicting a component failure based on the comparison(s), or any combination thereof. In at least one example, one or more baselines can be or include a mathematical model of a pneumatic control system, as a whole, and/or of one or more monitored components of the pneumatic control system. In at least one example, one or more baselines can include one or more averages of one or more operating characteristics. In at least one example, one or more baselines can include one or more standard deviations of one or more operating characteristics. In at least one example, one or more baselines can include one or more tolerances of one or more operating characteristics.

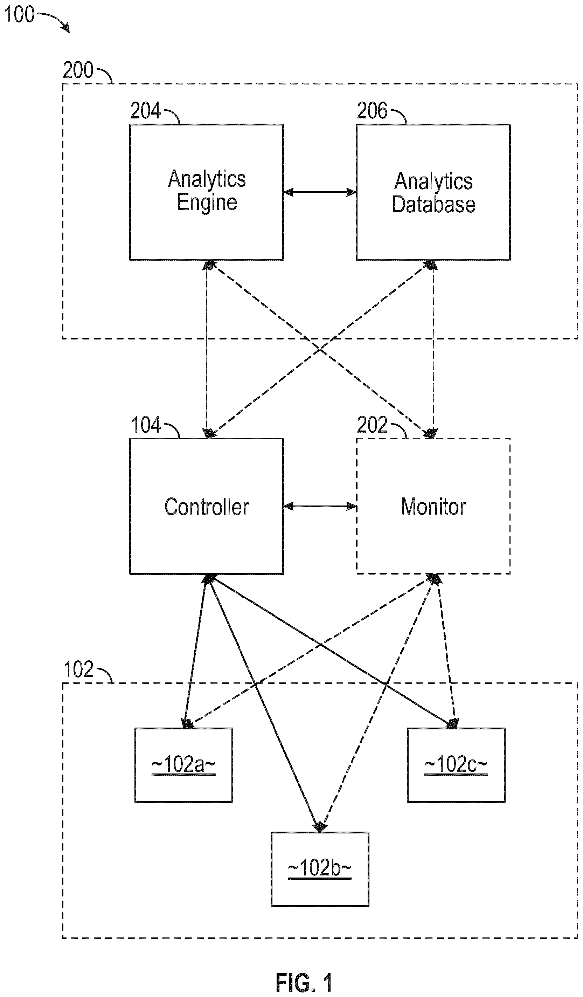

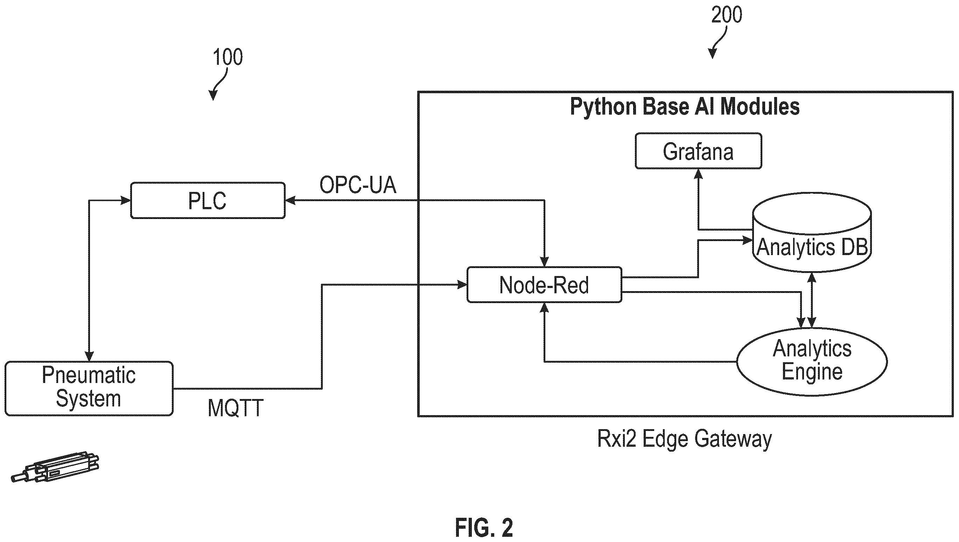

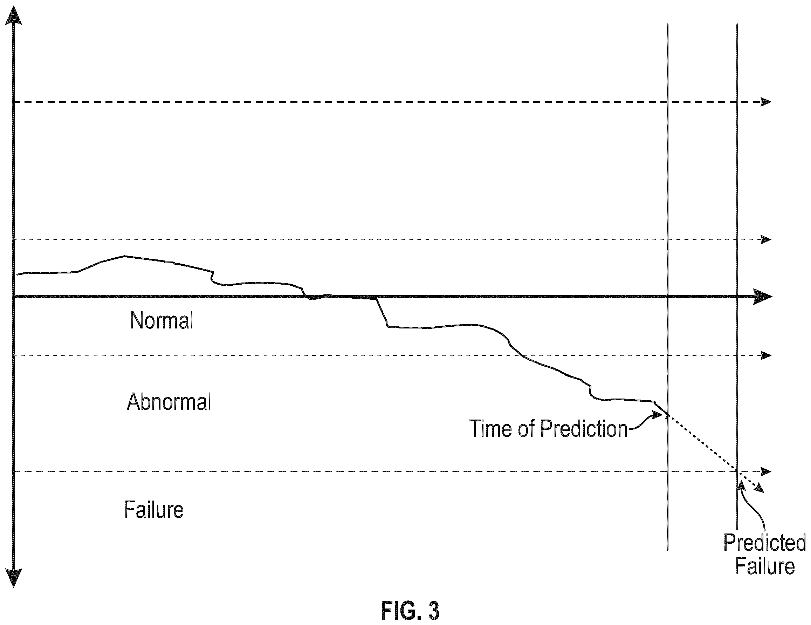

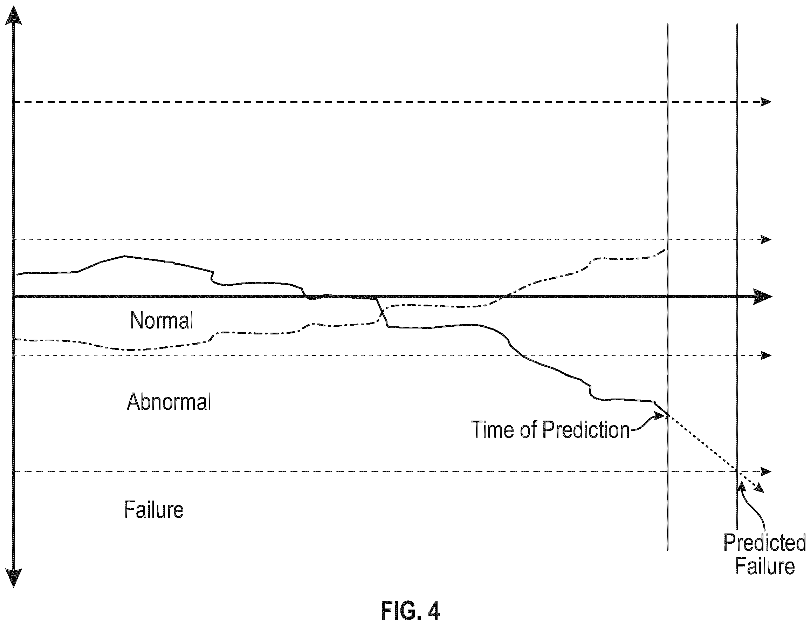

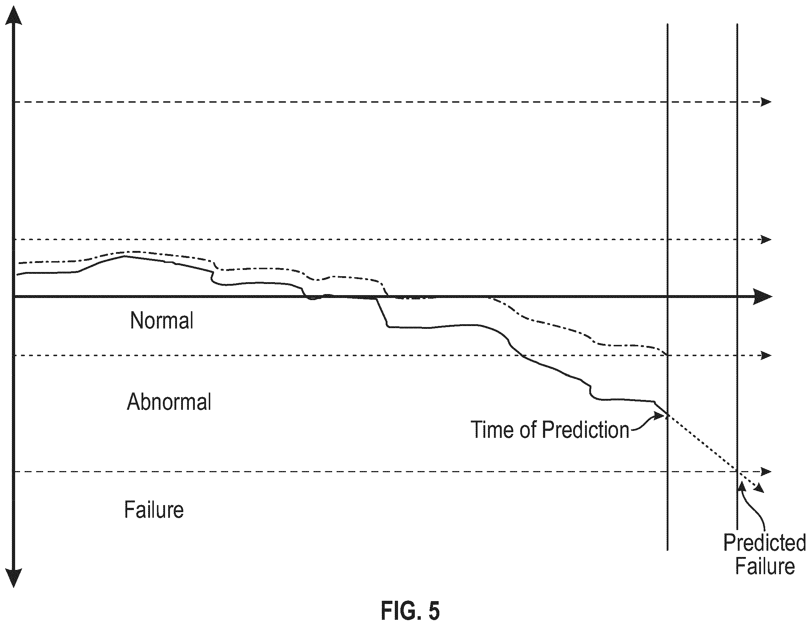

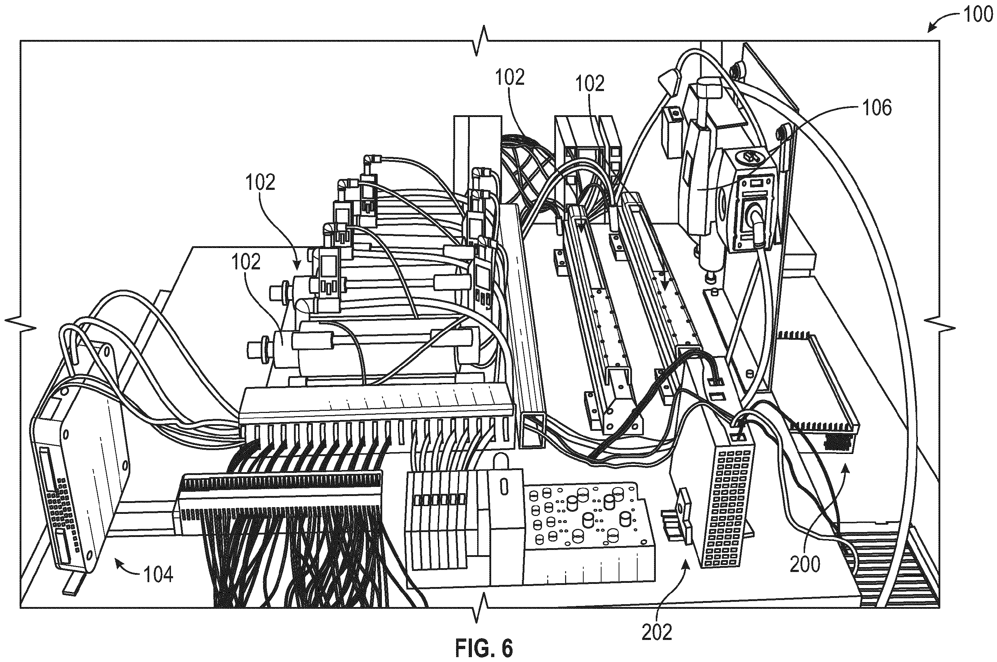

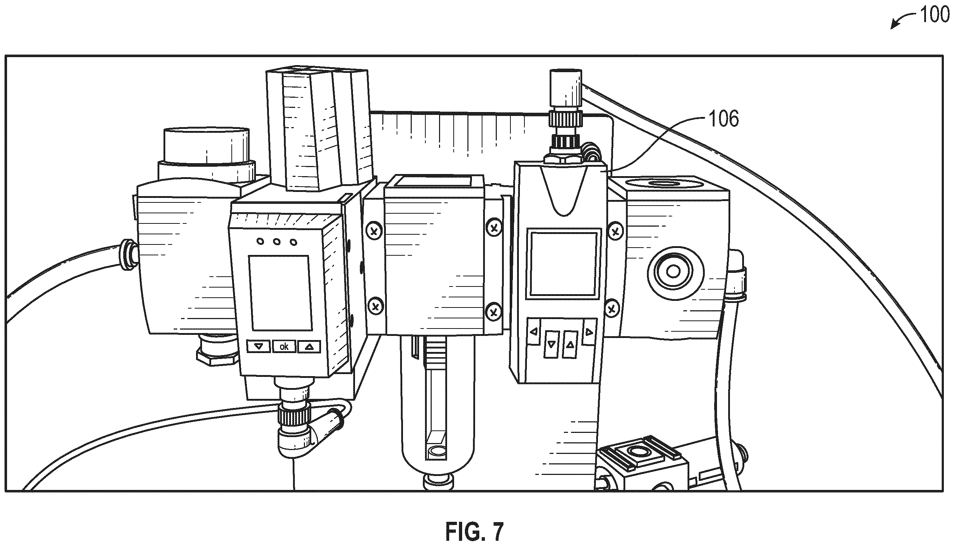

FIG. 1 is a schematic view of one of many examples of a monitored industrial system according to the disclosure. FIG. 2 is a schematic view of another of many examples of a monitored industrial system according to the disclosure. FIG. 3 is a graph of operating characteristics of an industrial system according to the disclosure. FIG. 4 is another graph of operating characteristics of an industrial system according to the disclosure. FIG. 5 is yet another graph of operating characteristics of an industrial system according to the disclosure. FIG. 6 is a perspective view of one of many examples of a monitored simplified industrial system according to the disclosure. FIG. 7 is a front view of a portion of the system of FIG. 6. FIGS. 1-7 are described in conjunction with one another.

In at least one example, a method for monitoring of an industrial system 100, such as a pneumatic control system, according to the disclosure can include monitoring a plurality of operating characteristics of the system 100, logging a plurality of instances of the operating characteristics, creating a baseline based on the plurality of instances of the operating characteristics, comparing a trend in the plurality of instances of the operating characteristics to the baseline, predicting a component failure based on the comparison, or any combination thereof. An industrial system 100, such as a pneumatic control system, according to the disclosure can include a variety of components 102, such as one or more pneumatic cylinders, one or more pneumatically controlled valves, one or more other components of the system, or any combination thereof. Such cylinders can include linear actuated cylinders used to move or position objects and/or actuate other devices, and the like. Such valves can include process control valves, pilot operated valves, and the like. In at least one example, any and/or all of the components 102 can be monitored by one or more of a variety of sensors 106, such as AVENTICS Series AF2 flow sensors, AVENTICS Series PE5 pressure sensors, and the like. It can be appreciated, having read the instant disclosure, that the components 102 of industrial systems 100 can malfunction, which can include failing to function adequately, or otherwise failing to perform satisfactorily.

In at least one example, the components 102 of industrial systems 100 can be controlled by one or more controllers 104, such as a programable logic controller. In at least one example, the controller 104 can monitor and/or log the operating characteristics, such as in addition to controlling the components 102. In at least one example, one or more artificial intelligence, or machine learning, modules 200 can be incorporated within, piggy back, communicate with, or otherwise monitor one or more aspects of the system 100. In at least one example, the module 200 can directly monitor each monitored component 102a, 102b, 102c, do so through the controller 104, do so through one or more separate monitoring devices 202, or any combination thereof. In at least one example, the module 200 can include one or more analytics engines 204 that can perform the component failure prediction. In at least one example, the module 200 can include one or more analytics databases 206 that can store, or log, the operating characteristics. In at least one example, the analytics engine 204 can read the operating characteristics through the controller 104 and/or the monitoring device 202 and store the operating characteristics within itself and/or in the analytics database 206. In at least one example, the analytics database 206 receives the operating characteristics directly from the controller 104 and/or the monitoring device 202, and the analytics engine 204 accesses the operating characteristics in the analytics database 206. In at least one example, the analytics engine 204 can report component failure predictions to the controller 104, another supervisory system, directly to an operator, or any combination thereof.

In at least one example, the module 200 can communication via an Rxi2 gateway, an OPC unified architecture (OPC UA), message queuing telemetry transport (MQTT), other communications techniques and protocols, or any combination thereof. In at least one example, monitoring device 202, the analytics engine 204, the analytics database 206, or any combination thereof can communicate with the controller 104 OPC-UA, MQTT, another communications protocol, or any combination thereof. In at least one example, real time operating characteristics can be passed from sensors to the analytics engine 204 and/or the analytics database 206 using MQTT and/or an application programming interface (API). In at least one example, the analytics engine 204 can report failure predictions using MQTT and/or API. In at least one example, the analytics engine 204 can provide real time and/or historical data the controller 104, another supervisory system, directly to an operator, or any combination thereof.

It can be appreciated, having read the instant disclosure, that the components 102 of industrial systems 100 can have a variety of operating characteristics. In at least one example, the operating characteristics can include a stroke length, an opening speed, a closing speed, a cycle time, a cycle count, a flow rate, a pressure, a torque, another operating characteristic associated with a component 102, or any combination thereof. In at least one example, the opening speed can indicate how long it takes for the component 102 to actuate, such as a valve to open. In at least one example, the closing speed can indicate how long it takes for the component 102 to deactivate, such as a valve to close. In at least one example, the cycle time can indicate how long it takes for the component 102 to fully cycle. Slower speeds may indicate potential failure, such as caused by lack of lubrication and/or buildup of debris or corrosion. In at least one example, the cycle count can indicate how many times the component 102 has cycled, which may indicate wear. In at least one example, the flow rate can indicate a rate to or through the component 102. For example, decreased flow rates may indicate clogging and/or failure to fully open, while increased flow rates may indicate a leak at or downstream of the component 102. In at least one example, the pressure can indicate a process control and/or an instrumentation pressure. For example, decreased pressures may indicate a leak at or downstream of the component 102, while increased pressures may indicate clogging and/or failure to fully open. In at least one example, the torque can indicate a torque required to actuate, or open, or deactivate, or close the component 102, which may indicate potential failure, such as caused by lack of lubrication and/or buildup of debris or corrosion.

In an ideal world, each time a component 102 actuates, the associated speeds, flow rates, pressures, etc., are identical. However, in industrial systems 100, this is often not the case. Rather, those characteristics can change from one activation to the next. But, not all changes necessarily indicate failure or impending failure. Thus, in at least one example, there can be a range of normal operating characteristics. These normal operating characteristics can be learned, over time, by the module 200. In at least one example, the baseline can be or include a mathematical model of the system 100, as a whole, and/or of each monitored component of the system 100. In at least one example, the baseline can include an average of the operating characteristics. In at least one example, the baseline can include a standard deviation of the operating characteristics. In at least one example, the baseline can include one or more tolerances of the operating characteristics.

In at least one example, the module 200 can create and/or modify the baseline and/or model based on operating characteristics can be learned over time, or receiving multiple instances of the operating characteristics, such as when the system 100 is functioning properly. The baseline, or model, can be fixed and/or change over time. In at least one example, the baseline can be fixed once created. In at least one example, the baseline includes fixed elements and moving elements. In at least one example, the moving elements can be modified with subsequent instances of the operating characteristics. In at least one example, the baseline or model, itself, can be modified with subsequent instances of the operating characteristics.

It can be appreciated, having read the instant disclosure, that a failure or impending failure is not necessarily indicated by one or more operating characteristics straying from the normal operating characteristics, baseline, or model. Thus, in at least one example, there can be a range of abnormal, but not necessarily failure, operating characteristics. As discussed above, a failure - as used herein - includes a malfunction, failing to function adequately, or failing to perform satisfactorily, such as failing to actuate or open quickly enough, failing to pass adequate media, leaking excessively, etc. It can thus be appreciated that failure, as used herein, is beyond normal or abnormal behavior. While abnormal behavior does not necessitate immediate repair, replacement, or maintenance, a failure is more urgent and can actually stop the system 100, or necessitate stoppage of the system 100. It can be appreciated, then, having read the instant disclosure, that failures are to be avoided when possible.

Thus, a method according to the disclosure seeks to predict failures before they happen. For example, once the module 200 has learned the operating characteristics of the system 100, and/or components 102 of the system 100, such as when functioning normally, the module 200 need not necessarily predict a failure when those operating characteristics stray from normal into an abnormal range, as a prior art reactive alarm system might. Rather, in at least one example, the module 200 generates a failure prediction when a recent trend in the operating characteristics of one or more components 102 of the system 100 suggest that a failure or any of those components 102, or another component 102, is likely. For example, the module 200 may notice that a pressure or flow rate associated with multiple components 102 is declining, as shown in Fig. 5, thereby predicting a failure - not necessarily of those components 102 - but possibly of another component, such as a compressor feeding those components 102. As another example, a declining pressure or flow rate associated with one component 102a coupled with increasing pressure or flow rate associated with other components 102b, 102c, such as shown in FIG. 4, can indicate an impending failure of the initial component 102a.

In at least one example, predicting the component failure can include recognizing a pattern in a trend of operating characteristics. In at least one example, the pattern can be based on a previous component failure. In at least one example, the pattern can be based on multiple components 102. In at least one example, the pattern can be based on interaction between components 102. In at least one example, the pattern can be based on components 102 other than the component 102, the failure of which is predicted.

In at least one example, the previous component failure can be of, or related to, the component 102 who's failure is being predicted. For example, where a component 102 has failed, been repaired, and placed back in service, its behavior prior to the previous failure can be used by the module 200 to predict a subsequent failure. In at least one example, the previous component failure can be of, or related to, a different component previously performing the function of the component who's failure is being predicted. For example, where a component 102 has failed, and been replaced, the prior component's behavior prior to the its failure can be used by the module 200 to predict a subsequent failure of the new component 102 performing the safe function. In at least one example, the previous component failure can be of, or related to, a different component other than the component who's failure is being predicted. For example, as discussed above, the module 200 can predict a compressor leak or other failure based upon low downstream pressures or flow rates associated with one or more other components 102, even where pressures or flow rates associated with that compressor do not themselves indicate a failure.

In at least one example, in predicting the component failure, the trend can be associated with one or more components while the baseline can be associated with a plurality of components. In at least one example, the trend can be a more recent trend, when compared to the instances of the operating characteristics used to create the baseline, or model. In at least one example, the trend can include instances of the operating characteristics used to create the baseline, or model.

In at least one example, the module 200 can predict when a component 102, such as a pneumatic cylinder, a pneumatically controlled valve, or the like, will malfunction based on a trend of increased cycle times of the component 102. In at least one example, the module 200 can predict when a component 102, will malfunction based on a trend of decreased flow rate through the component 102. In at least one example, the module 200 can predict when a component 102 will malfunction based on a trend of increased flow rate to and/or through the component 102. In at least one example, the module 200 can predict when a component 102 will malfunction based on a trend of decreased pressure associated with the component 102.

In at least one example, the module 200 can predict when a component 102, such as a pneumatic cylinder, a pneumatically controlled valve, or the like, will malfunction based on a trend associated with other components 102. In at least one example, the module 200 can predict when one component 102 will malfunction based on a trend of increased cycle times of that component 102 compared with another component 102. In at least one example, the module 200 can predict when one component 102 will malfunction based on a trend of decreased flow rate through that component 102 compared with another component 102. In at least one example, the module 200 can predict when one component 102 will malfunction based on a trend of increased flow rate to that component 102 compared with another component 102. In at least one example, the module 200 can predict when one component 102 will malfunction based on a trend of decreased pressure associated with that component 102 compared with another component 102.

In at least one example, a method for monitoring an industrial system 100, such as a pneumatic control system, according to the disclosure can include monitoring a plurality of operating characteristics of a plurality of components 102 of the system 100, logging a plurality of instances of the operating characteristics for each of the components 102, creating a mathematical model of the system 100 from the plurality of instances of the operating characteristics, predicting a failure of one of the components 102 by comparing a trend in the plurality of instances of the operating characteristics to the model, or any combination thereof. In at least one example, the operating characteristics can include a cycle time, a flow rate, and/or a pressure associated with each of one or more components 102. In at least one example, the model can model the system 100 as a whole and/or can include discrete modelling of any of the components 102.

In at least one example, a method for monitoring an industrial system 100, such as a pneumatic control system, according to the disclosure can include monitoring a plurality of operating characteristics of a plurality of components 102 of the system 100, logging a plurality of instances of the operating characteristics for each of the components 102, creating a mathematical model of the system 100 from the plurality of instances of the operating characteristics, predicting a remaining useful life of one of the components 102 (e.g., a pneumatic cylinder) by comparing a trend in the plurality of instances of the operating characteristics to the model, or any combination thereof. In at least one example, the operating characteristics can include a cycle time, a flow rate, and a pressure associated with each of the components 102. In at least one example, the model can model the system 100 as a whole and/or can include discrete modelling of any of the components 102.

It can also be appreciated, having read the instant disclosure, that two components 102 of the same type and/or same size can have different operating characteristics. For example, two brand new pneumatic cylinders of the same type, same dimensions, produced in the same facility, can have different stroke lengths, different actuation/opening speeds, different deactivation/closing speeds, different cycle times, differences in other operating characteristics, or any combination thereof.

In at least one example, the module 200 can create and/or modify a baseline and/or model based on operating or operation of one or more of the different operating characteristics of each component 102, including differences between individual components of the same type and size. That baseline and/or model can be compared with future operating characteristics of each component 102 to determine or predict when each component 102 can be expected to fail and/or its remaining useful life. For example, each component 102 can have an expected service life, which may be specified by the manufacturer. However, it can be appreciated that an individual component can fail before or after the manufacturer expects. By analyzing the baseline and/or model described herein, along with more recent trends in operating characteristics of each component 102, the module 200 can predict if an individual component 102 can be expected to fail before or after its specified useful life, thereby avoiding unexpected failures and maximizing efficiency of the system 100. For example, if the module 200 detects a faster than expected degradation in stroke length, opening speed, closing speed, cycle time, another operating characteristic, or any combination thereof, or a sudden change therein, the module 200 can predict an impending failure, thereby allowing maintenance personnel to schedule replacement or repair of that component 102 before actual failure thereof. On the other hand, if the module 200 detects a slower than expected degradation in stroke length, opening speed, closing speed, cycle time, another operating characteristic, or any combination thereof, the module 200 can predict a useful life extending beyond the specified useful life, thereby optimizing the efficiency of the system 100, at least by avoiding unnecessary scheduled maintenance and/or unnecessary replacement of a given component 102.

In at least one example, the systems and methods according to the disclosure can optimize maintenance schedules by, for example, predicting which components 102 can be expected to fail between a given scheduled maintenance and the next, thereby indicating which components 102 need to be repaired or replaced during the given scheduled maintenance and which can wait until the next. In at least one example, the systems and methods according to the disclosure can optimize maintenance schedules by, for example, altering maintenance schedules such that maintenance can be scheduled comfortably before clusters of components 102 are expected to fail and/or advancing or delaying a given scheduled maintenance task based on predicted failures or useful life of a component 102 or group of components 102.

In at least one example, a method for monitoring of an industrial system 100, such as a pneumatic control system, according to the disclosure can include monitoring a plurality of operating characteristics of a plurality of components 102 of the system 100, logging a plurality of instances of the operating characteristics for each of the components 102, creating a mathematical model of the system 100 from the plurality of instances of the operating characteristics, predicting an optimal pressure of the system 100 to achieve production capacity by comparing a trend in the plurality of instances of the operating characteristics to the model, or any combination thereof. In at least one example, the operating characteristics can include a cycle time, a flow rate, and a pressure associated with each of the components 102. In at least one example, the model can model the system 100 as a whole and/or include discrete modelling of any of the components 102.

It can be appreciated that the system 100 can include a large quantity and/or variety of components 102. In at least one example, each component 102, or different components 102, may require different pneumatic pressures to perform optimally. In at least one example, the module 200 can determine an optimal pressure for each component 102, or group of components 102, thereby optimizing efficiency of the system 100, at least by avoiding unnecessarily high pneumatic pressures (e.g., supply pressure). In at least one example, the module 200 can predict an optimal pressure for each component 102, as that component wears or ages, by analyzing the baseline and/or model described herein, along with more recent trends in operating characteristics of each component 102. This optimal pressure can be communicated to maintenance, or other, personnel and/or controlled automatically by the controller 102 and/or the module 200.

In at least one example, the systems and methods according to the disclosure can provide real time monitoring of a variety of operating characteristics, such as various pressures, air flows, volume consumptions, times, etc. In at least one example, the systems and methods according to the disclosure can create a baseline/model of an industrial system 100. In at least one example, the systems and methods according to the disclosure can calculate, or otherwise determine, deviations from that baseline/model, which can be based on thresholds and/or benchmark limits. In at least one example, the systems and methods according to the disclosure can provide alerts, such as to maintenance personnel, based on those deviations and/or maintenance schedules, thereby avoiding unexpected failures and/or unnecessary component replacement. In at least one example, the systems and methods according to the disclosure can utilize machine learning algorithms, such as k-mean clustering, hierarchical clustering, principal component analysis, random forest regressor, time series forecasting models, or any combination thereof to analyze the data, and create unique machine signatures for each of the components 102 based on its unique operating characteristics and/or patterns, and to predict failures, useful life, and/or optimal operating pressures.

In at least one example, a method for monitoring of an industrial system, such as a pneumatic control system, can include monitoring a plurality of operating characteristics of the system, logging a plurality of instances of the operating characteristics, creating a baseline based on the plurality of instances of the operating characteristics, comparing a trend in the plurality of instances of the operating characteristics to the baseline, predicting a component failure based on the comparison, or any combination thereof. In at least one example, the baseline can be or include a mathematical model of the pneumatic control system, as a whole, and/or of each monitored component of the pneumatic control system. In at least one example, the baseline can include an average of the operating characteristics. In at least one example, the baseline can include a standard deviation of the operating characteristics. In at least one example, the baseline can include one or more tolerances of the operating characteristics.

In at least one example, monitored components can include one or more pneumatic cylinders, one or more pneumatically controlled valves, another component of the system, or any combination thereof. In at least one example, the operating characteristics can include an opening speed, a closing speed, a cycle time, a cycle count, a flow rate, a pressure, a torque, another operating characteristic associated with a pneumatically controlled component, or any combination thereof.

The baseline, or model, can be fixed and/or change over time. In at least one example, the baseline can be fixed once created. In at least one example, the baseline includes fixed elements and moving elements. In at least one example, the moving elements can be modified with subsequent instances of the operating characteristics. In at least one example, the baseline, itself, can be modified with subsequent instances of the operating characteristics.

In at least one example, predicting the component failure can include recognizing a pattern in the trend, such as a pattern based on a previous component failure. In at least one example, the previous component failure can be of, or related to, the component who's failure is being predicted. In at least one example, the previous component failure can be of, or related to, a different component other than the component who's failure is being predicted. In at least one example, the previous component failure can be of, or related to, a different component previously performing the function of the component who's failure is being predicted. In at least one example, in predicting the component failure, the trend can be associated with one or more components while the baseline can be associated with a plurality of components. In at least one example, the trend can be a more recent trend, when compared to the instances of the operating characteristics used to create the baseline, or model. In at least one example, the trend can include instances of the operating characteristics used to create the baseline, or model.

In at least one example, predicting the component failure can include predicting when a pneumatically controlled component will malfunction based on a trend of increased cycle times of the pneumatically controlled component. In at least one example, predicting the component failure can include predicting when a pneumatically controlled component will malfunction based on a trend of decreased flow rate through the pneumatically controlled component. In at least one example, predicting the component failure can include predicting when a pneumatically controlled component will malfunction based on a trend of increased flow rate to and/or through the pneumatically controlled component. In at least one example, predicting the component failure can include predicting when a pneumatically controlled component will malfunction based on a trend of decreased pressure associated with the pneumatically controlled component.

In at least one example, predicting the component failure can include predicting when one pneumatically controlled component will malfunction based on a trend of increased cycle times of that pneumatically controlled component compared with another pneumatically controlled component. In at least one example, predicting the component failure can include predicting when one pneumatically controlled component will malfunction based on a trend of decreased flow rate through that pneumatically controlled component compared with another pneumatically controlled component. In at least one example, predicting the component failure can include predicting when one pneumatically controlled component will malfunction based on a trend of increased flow rate to that pneumatically controlled component compared with another pneumatically controlled component. In at least one example, predicting the component failure can include predicting when one pneumatically controlled component will malfunction based on a trend of decreased pressure associated with that pneumatically controlled component compared with another pneumatically controlled component.

In at least one example, a system can include one or more pneumatic cylinders configured to move one or more loads linearly, one or more PLCs, one or more gateway computers, one or more regulators, one or more sensors, or any combination thereof. In at least one example, a system can be configured to receive live values from one or more components and/or sensors, train an artificial intelligence engine based on the live values, prepare a machine learning model, detect a unique data pattern or machine signature for one or more components, predict pressure consumption for running an amount of cycles, calculate a remaining useful life of one or more components, or any combination thereof. In at least one example, a system can optimize performance and/or maintenance of one or more pneumatic cylinders. In at least one example, a system can fine-tune settings for key parameters such as pressure for better performance and cost savings. In at least one example, a system can predict a remaining amount of time left before a pneumatic cylinder reaches the end of its operational life and/or generate a schedule for replacement of one or more pneumatic cylinders prior to potential failure.

In at least one example, a method for monitoring of an industrial system, such as a pneumatic control system, can include monitoring a plurality of operating characteristics of a plurality of components of the system, logging a plurality of instances of the operating characteristics for each of the components, creating a mathematical model of the system from the plurality of instances of the operating characteristics, predicting a failure of one of the components by comparing a trend in the plurality of instances of the operating characteristics to the model, or any combination thereof. In at least one example, the operating characteristics can include a cycle time, a flow rate, and a pressure associated with each of the components, or any combination thereof. In at least one example, the model can model the system as a whole and/or include discrete modelling of any of the components.

In at least one example, a method for monitoring of an industrial system, such as a pneumatic control system, can include monitoring a plurality of operating characteristics of a plurality of components of the system, logging a plurality of instances of the operating characteristics for each of the components, creating a mathematical model of the system from the plurality of instances of the operating characteristics, predicting a remaining useful life of one of the components by comparing a trend in the plurality of instances of the operating characteristics to the model, or any combination thereof. In at least one example, the operating characteristics can include a cycle time, a flow rate, and a pressure associated with each of the components, or any combination thereof. In at least one example, a method can include calculating a remaining useful life for a pneumatic cylinder. In at least one example, the model can model the system as a whole and/or include discrete modelling of any of the components.

In at least one example, a method for monitoring of an industrial system, such as a pneumatic control system, can include monitoring a plurality of operating characteristics of a plurality of components of the system, logging a plurality of instances of the operating characteristics for each of the components, creating a mathematical model of the system from the plurality of instances of the operating characteristics, predicting an optimal pressure of the system to achieve production capacity by comparing a trend in the plurality of instances of the operating characteristics to the model, or any combination thereof. In at least one example, the operating characteristics can include a cycle time, a flow rate, and a pressure associated with each of the components, or any combination thereof. In at least one example, the model can model the system as a whole and/or include discrete modelling of any of the components. In at least one example, a non-transitory computer readable media can have instructions stored thereon that, when executed by a processor, cause the processor to perform a method as shown and/or described herein.

Other and further examples utilizing one or more aspects of the disclosure can be devised without departing from the Applicants' disclosure. For example, the devices, systems and methods can be implemented for numerous different types and sizes in numerous different industries. Further, the various methods and examples of the devices, systems and methods can be included in combination with each other to produce variations of the disclosed methods and examples. Discussion of singular elements can include plural elements and vice versa. The order of steps can occur in a variety of sequences unless otherwise specifically limited. The various steps described herein can be combined with other steps, interlineated with the stated steps, and/or split into multiple steps. Similarly, elements have been described functionally and can be embodied as separate components or can be combined into components having multiple functions.

Further examples are set out the clauses below:
1. A method comprising:
   monitoring a plurality of operating characteristics of a pneumatic control system;
   logging a plurality of instances of the operating characteristics;
   creating a baseline based on the plurality of instances of the operating characteristics;
   comparing a trend in the plurality of instances of the operating characteristics to the baseline; and
   predicting a component failure based on the comparison.
2. The method of clause 1, wherein monitoring the plurality of operating characteristics comprises monitoring a cycle time, a flow rate, and a pressure associated with a pneumatically controlled component.
3. The method of clause 1 or 2, wherein monitoring the plurality of operating characteristics comprises monitoring an opening speed, a closing speed, a cycle count, a flow rate, a pressure, and a torque associated with a pneumatically controlled component.
4. The method of any one of the preceding clauses, wherein the baseline comprises a mathematical model of the pneumatic control system.
5. The method of any one of the preceding clauses, wherein the baseline comprises a mathematical model of each monitored component of the pneumatic control system.
6. The method of any one of the preceding clauses, wherein the baseline is fixed once created.
7. The method of any one of clauses 1-6, wherein the baseline includes fixed elements and moving elements, and wherein the moving elements are modified with subsequent instances of the operating characteristics.
8. The method of any one of clauses 1-6, wherein the baseline is modified with subsequent instances of the operating characteristics.
9. The method of any one of the preceding clauses, wherein predicting the component failure comprises recognizing a pattern in the trend.
10. The method of clause 9, wherein the pattern is based on a previous component failure.
11. The method of any one of the preceding clauses, wherein predicting the component failure comprises comparing the trend associated with one component with the baseline, which is associated with a plurality of components.
12. The method of any one of the preceding clauses, wherein predicting the component failure comprises predicting when a pneumatically controlled component will malfunction based on a trend of increased cycle times of the pneumatically controlled component.
13. The method of any one of the preceding clauses, wherein predicting the component failure comprises predicting when a pneumatically controlled component will malfunction based on a trend of decreased flow rate through the pneumatically controlled component.
14. The method of any one of the preceding clauses, wherein predicting the component failure comprises predicting when a pneumatically controlled component will malfunction based on a trend of increased flow rate to the pneumatically controlled component.
15. The method of any one of the preceding clauses, wherein predicting the component failure comprises predicting when a pneumatically controlled component will malfunction based on a trend of decreased pressure associated with the pneumatically controlled component.
16. The method of any one of the preceding clauses, wherein predicting the component failure comprises predicting when a first pneumatically controlled component will malfunction based on a trend of increased cycle times of the first pneumatically controlled component compared with a second pneumatically controlled component.
17. The method of any one of the preceding clauses, wherein predicting the component failure comprises predicting when a first pneumatically controlled component will malfunction based on a trend of decreased flow rate through the first pneumatically controlled component compared with a second pneumatically controlled component.
18. The method of any one of the preceding clauses, wherein predicting the component failure comprises predicting when a first pneumatically controlled component will malfunction based on a trend of increased flow rate to the first pneumatically controlled component compared with a second pneumatically controlled component.
19. The method of any one of the preceding clauses, wherein predicting the component failure comprises predicting when a first pneumatically controlled component will malfunction based on a trend of decreased pressure associated with the first pneumatically controlled component compared with a second pneumatically controlled component.
20. A method comprising:
   monitoring a plurality of operating characteristics of a plurality of components of a pneumatic control system, wherein the operating characteristics include a cycle time, a flow rate, and a pressure associated with each of the plurality of components;
   logging a plurality of instances of the operating characteristics for each of the plurality of components;
   creating a mathematical model of the pneumatic control system from the plurality of instances of the operating characteristics, wherein the model includes modelling of each of the plurality of components; and
   predicting at least one of a failure of one of the plurality of components, a remaining useful life of one of the plurality of components, an optimal pressure of the pneumatic control system, and a combination thereof, by comparing a trend in the plurality of instances of the operating characteristics to the model.

The inventions have been described in the context of preferred and other examples and not every example of the inventions has been described. Obvious modifications and alterations to the described examples are available to those of ordinary skill in the art having the benefits of the present disclosure. The disclosed and undisclosed examples are not intended to limit or restrict the scope or applicability of the inventions conceived of by the Applicants, but rather, in conformity with the patent laws, Applicants intend to fully protect all such modifications and improvements that come within the scope or range of equivalents of the following claims.

## Claims

1. A method comprising:
monitoring a plurality of operating characteristics of a pneumatic control system;
logging a plurality of instances of the operating characteristics;
creating a baseline based on the plurality of instances of the operating characteristics;
comparing a trend in the plurality of instances of the operating characteristics to the baseline; and
predicting a component failure based on the comparison.

2. The method of claim 1, wherein monitoring the plurality of operating characteristics comprises monitoring a cycle time, a flow rate, and a pressure associated with a pneumatically controlled component.

3. The method of claim 1 or 2, wherein monitoring the plurality of operating characteristics comprises monitoring an opening speed, a closing speed, a cycle count, a flow rate, a pressure, and a torque associated with a pneumatically controlled component.

4. The method of any one of the preceding claims, wherein the baseline comprises a mathematical model of the pneumatic control system.

5. The method of any one of the preceding claims, wherein the baseline comprises a mathematical model of each monitored component of the pneumatic control system.

6. The method of any one of the preceding claims, wherein the baseline is fixed once created.

7. The method of any one of claims 1-5, wherein the baseline includes fixed elements and moving elements, and wherein the moving elements are modified with subsequent instances of the operating characteristics.

8. The method of any one of the preceding claims, wherein the baseline is modified with subsequent instances of the operating characteristics.

9. The method of any one of the preceding claims, wherein predicting the component failure comprises recognizing a pattern in the trend.

10. The method of claim 9, wherein the pattern is based on a previous component failure.

11. The method of any one of the preceding claims, wherein predicting the component failure comprises comparing the trend associated with one component with the baseline, which is associated with a plurality of components.

12. The method of any one of claims 1-10, wherein predicting the component failure comprises predicting when a pneumatically controlled component will malfunction based on a trend of increased cycle times of the pneumatically controlled component.

13. The method of any one of claims 1-10, wherein predicting the component failure comprises predicting when a pneumatically controlled component will malfunction based on a trend of decreased flow rate through the pneumatically controlled component.

14. The method of any one of claims 1-10, wherein predicting the component failure comprises predicting when a pneumatically controlled component will malfunction based on a trend of increased flow rate to the pneumatically controlled component; or optionally
wherein predicting the component failure comprises predicting when a pneumatically controlled component will malfunction based on a trend of decreased pressure associated with the pneumatically controlled component; or optionally
wherein predicting the component failure comprises predicting when a first pneumatically controlled component will malfunction based on a trend of increased cycle times of the first pneumatically controlled component compared with a second pneumatically controlled component; or optionally
wherein predicting the component failure comprises predicting when a first pneumatically controlled component will malfunction based on a trend of decreased flow rate through the first pneumatically controlled component compared with a second pneumatically controlled component; or optionally
wherein predicting the component failure comprises predicting when a first pneumatically controlled component will malfunction based on a trend of increased flow rate to the first pneumatically controlled component compared with a second pneumatically controlled component; or optionally
wherein predicting the component failure comprises predicting when a first pneumatically controlled component will malfunction based on a trend of decreased pressure associated with the first pneumatically controlled component compared with a second pneumatically controlled component.

15. The method of claim 1,
wherein monitoring the plurality of operating characteristics of the pneumatic control system comprises monitoring a plurality of operating characteristics of a plurality of components of the pneumatic control system, wherein the operating characteristics include a cycle time, a flow rate, and a pressure associated with each of the plurality of components;
wherein logging the plurality of instances of the operating characteristics comprises logging a plurality of instances of the operating characteristics for each of the plurality of components;
wherein creating a baseline based on the plurality of instances of the operating characteristics comprises creating a mathematical model of the pneumatic control system from the plurality of instances of the operating characteristics, wherein the model includes modelling of each of the plurality of components; and
predicting at least one of a failure of one of the plurality of components, a remaining useful life of one of the plurality of components, an optimal pressure of the pneumatic control system, and a combination thereof, by comparing a trend in the plurality of instances of the operating characteristics to the model.
